(19) **Europäisches Patentamt / European Patent Office / Office européen des brevets**

(11) **EP 4 573 903 A1**

(12) # EUROPEAN PATENT APPLICATION

(43) Date of publication:
**25.06.2025 Bulletin 2025/26**

(21) Application number: **23219524.8**

(22) Date of filing: **21.12.2023**

(51) International Patent Classification (IPC):
**A01N 37/10** (2006.01)    **A01N 43/38** (2006.01)
**A01N 43/90** (2006.01)    **A01N 47/36** (2006.01)
**A01P 15/00** (2006.01)    **A01P 21/00** (2006.01)

(52) Cooperative Patent Classification (CPC):
(C-Sets available)
**A01N 43/38; A01N 37/10; A01N 43/90;
A01N 47/36; A01P 15/00; A01P 21/00**    (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Fine Agrochemicals Limited Worcester WR5 2RQ (GB)**

(72) Inventors:
• **WIKELEY, Philip Simon
  MALVERN, WR14 1PG (GB)**
• **ANDRÉ, Olivier
  31320 CASTANET TOLOSAN (FR)**

(74) Representative: **Hoyng Rokh Monegier B.V.
Rembrandt Tower, 30th Floor
Amstelplein 1
1096 HA Amsterdam (NL)**

(54) **METHOD FOR PREVENTION OR TREATMENT OF PLANT GALL DEVELOPMENT**

(57)    The invention relates to a method for preventing or reducing plant gall formation, the method comprising applying on a plant a composition comprising a suitable amount of at least one ingredient selected from the group consisting of cytokinins, auxins, or auxin precursors. The auxin is preferably indole-3-butyric acid (IBA). The invention further relates to a method for treating seeds. The invention further relates to the use of a composition comprising a suitable amount of an auxin or an auxin precursor, for the prevention and/or reduction of plant gall formation. The gall formation is preferably caused by clubroot disease.

EP 4 573 903 A1

(52)  Cooperative Patent Classification (CPC): (Cont.)

C-Sets
**A01N 43/38, A01N 37/42;**
**A01N 43/38, A01N 43/90**

**Description**

Field of the invention

The invention relates to a method for preventing or reducing plant gall development, in particular in Brassica plants.

Background of the invention

Galls are structures that form as a result of the abnormal growth activities of plants in response to gall-inducing organisms. Galls may occur on leaves, twigs, roots, or flowers. Particularly, the development of galls on infected roots can disrupt water and nutrient uptake in affected plants, resulting in wilting, stunting and premature ripening of the above-ground organs.

Gall formation may be caused by the action of insects, bacteria, fungi, nematodes, viruses, or protozoa parasites. Gall formation in the host is a common feature of phytomyxid parasites. Some phytomyxids are well-studied and include known plant pathogens such as *Spongospora subterranea,* the cause of the powdery scab disease in potatoes, and the obligate parasite *Plasmodiophora brassicae,* which causes clubroot, an economically important disease of plants in the Brassicaceae family. Clubroot is known to occur in more than 60 countries and results in a 10%-15% reduction in yields on a global scale.

Clubroot gets its name from the galls that form on the roots of susceptible plants; however, symptoms vary depending on the growth stage of the crop at the time of infection. Infected plants typically exhibit reversible, foliar wilting when under slight soil moisture stress. As the disease progresses the leaves become reddened, chlorotic, necrotic, and abscise. Infection that occurs at later stages may not result in such pronounced above-ground symptoms, but infected plants will senesce prematurely. Thus, yield and quality losses may still be observed.

The use of fungicides has been part of clubroot management strategies since the 1980s. Several synthetic fungicides, such as fluazinam, pentachloronitrobenzene, metalaxyl-mancozeb, azoxystrobin, difenoconazole, and carbendazim, have been tested against the clubroot pathogen. However, no consensus on the efficacy has been reached due to variable levels of control depending on the crop, geographical location, and application strategies.

WO2012/096405 relates to the use of the fungicide cyazofamid to brassica vegetables after seeding or settled planting in a farm field.

Biological control of clubroot has also been used to manage the disease. Among the several microorganisms with well-known biocontrol properties, *Trichoderma spp.* and *Bacillus spp.* have been extensively used to control clubroot disease in Asia, North America, and Latin America.

WO2005/045004 describes a method for controlling cruciferous plant diseases using bacteria belonging to the genus *Variovorax.*

The use of fungicides and biologicals has however come with little success. Growing plants that are resistant to clubroot disease is nowadays the best strategy. For example, EP1525317 relates to *Brassica oleracea* plants resistant to the disease clubroot. However, after only a few years, clubroot develops new strategies to infect those resistant plants, making them susceptible to clubroot disease.

Currently known methods for controlling gall formation in plants, particularly gall formation caused by *Plasmodiophora brassicae* have demonstrated a limited efficiency. Therefore, there is a need for alternative, and preferably more effective treatments for prevention and reduction of plant gall formation.

Summary of the invention

It is an object of the invention to provide a method for preventing or reducing plant gall formation. In addition, it is also an object of the invention to lower the gall weight of affected plants by applying a composition comprising at least one active ingredient selected from the group consisting of cytokinins, auxins, and auxin precursors.

The invention provides a method for preventing or reducing plant gall formation comprising applying on a plant a composition comprising a suitable amount of at least one active ingredient selected from the group consisting of cytokinins, auxins, and auxin precursors. In particular, the invention provides for a method wherein at least 20 g/ha of active ingredient are applied. Preferably, the suitable amount of active ingredient is less than 1000 g/ha, more preferably less than 500 g/ha, even more preferably less than 200 g/ha, yet even more preferably less than 120 g/ha.

In one embodiment, the composition comprises an auxin, wherein the auxin is preferably indole-3-butyric acid (IBA), indole-3-acetic acid (IAA), 1-naphthaleneacetic acid (NAA), or salts, esters, or amides thereof, more preferably wherein the auxin is indole-3-butyric acid (IBA), or salts, esters, or amides thereof. The composition may further comprise a cytokinin, preferably wherein the cytokinin is 6-benzyladenine (6BA).

In another embodiment, the composition comprises a cytokinin, wherein the cytokinin is preferably selected from the group consisting of 6-benzyladenine (6BA), forchlorfenuron (CPPU), kinetin, zeatin and topolin. More preferably, the composition comprises 6-benzyladenine (6BA).

The composition may further comprise at least one of a further cytokinins, ethylene modulators, plant growth regulators, amino acids, lignin production enhancers, nitrogen fertilizers, water conditioning agents, fungicides, plant defense agents, metal compounds, antioxidants, antifoam agents, biocides, and other additives.

In the method according to the invention, the plant is preferably selected from the Brassicaceae family, more preferably wherein the plant is selected from the *Brassica* genus, even more preferably selected from the list comprising *Brassica oleracea* including cabbage, broccoli, cauliflower, brussels sprouts, kale, kohlrabi, collard greens, savoy cabbage, gai lan; *Brassica rapa,* including turnip, Chinese cabbage, oilseed, sarson; *Brassica napus,* including canola, rutabaga, oilseed rape; *Brassica juncea,* including mustard greens, Indian mustard, brown mustard; *Brassica carinata,* including Ethiopian mustard, Abyssinian mustard; *Brassica nigra,* including black mustard; *Brassica hirta,* including white mustard, yellow mustard; and *Brassica tournefortii,* including Asian mustard, yet even more preferably wherein the plant is *Brassica napus,* yet even more preferably wherein the plant is oilseed rape.

The composition may be applied to plants from the Brassicaceae family up to BBCH-scale growth stage 20, preferably between BBCH-scale growth stage 10 and BBCH-scale growth stage 20, more preferably between BBCH-scale growth stage 12 and BBCH-scale growth stage 16.

In another embodiment, the plant is selected from the group consisting of *Raphanus sativus,* including radish and daiku, *Raphanus raphanistrum* (wild radish), *Nasturtium officinale* (watercress), *Eruca vesicaria sativa* (arugula), *Alyssum spp., Capsella bursa-pastoris* (shepherd's purse), *Thalsi arvense* (field penny cress), *Sinapis spp.* (mustard) including *S. alba* (white mustard), *Arabidopsis thaliana* (thale cress), *Eutrema japonicum* (wasabi), and *Armoracia rusticana* (horseradish).

In one embodiment, the composition is applied by foliar spray. In another embodiment, the composition is applied by watering.

In the method according to the invention, the plant gall formation may be caused by one of a bacterium, fungi, insect or protozoan, preferably the plant gall formation is caused by a protozoan parasite of the class *Phytomyxea,* more preferably the protozoan parasite is one of *Spongospora subterranea, Plasmodiophora brassicaceae,* or *Polymyxa betae,* even more preferably the protozoan parasite is *Plasmodiophora brassicaceae.*

The invention further relates to a method for treating seeds, comprising applying on seeds a composition comprising at least one active ingredient selected from the group of cytokinins and auxins. The composition may be applied by coating, pelleting, or dusting, or by other methods known in the art. In one embodiment, 30g to 6kg of the active compound are applied on about 100 kg seeds.

The invention further relates to the use of a composition comprising a suitable amount of an auxin or an auxin precursor, preferably comprising an auxin, wherein the auxin is preferably indole-3-butyric acid (IBA), indole-3-acetic acid (IAA), 1-naphthaleneacetic acid (NAA), or salts, esters, or amides thereof, more preferably wherein the auxin is indole-3-butyric acid (IBA), or salts, esters, or amides thereof, for the prevention and/or reduction of plant gall formation, preferably of plant gall formation caused by clubroot disease. The invention further relates to the use of a composition comprising a suitable amount of indole-3-butyric acid (IBA) for the prevention and/or reduction of plant gall formation, preferably of plant gall formation caused by clubroot disease. The composition for use according to the invention may further comprise a cytokinin. In particular, the composition may comprise 6-benzyladenine (6BA). The invention further relates to the use of 6-benzyladenine (6BA) for the prevention and/or reduction of plant gall formation, preferably of plant gall formation caused by clubroot disease. The use of the composition preferably reduces plant gall weight by 40% or more, more preferably by 50% or more, even more preferably by 70% or more. Further, the use of the composition preferably reduces the stress in the plant shown as a return to green plant coloration. Further, the use of the composition preferably reduces the disease index in plants. In particular, disease index may be reduced by 20% or more, preferably by 30% or more, even more preferably by 40% or more.

The experimental results show that treatment of plantlets with a formulation comprising an auxin, or an auxin precursor, and/or a cytokinin after sowing reduces gall development and disease index. Further, said treatment shows stress reduction shown as a return to green plant coloration. The methods and use according to the invention also increase survivability of the affected plants.

Hence, the present invention provides for methods of preventing or reducing plant gall formation, by applying a composition on a plant or to seeds. Furthermore, the invention provides the use of a composition for prevention and/or reduction of plant gall formation.

Detailed description of the invention

Galls are abnormal growths or swellings that develop on plant tissues, typically on stems, leaves, roots, or buds. Gall formation in plants is a physiological response triggered generally by various organisms, including insects, mites, nematodes, bacteria, and fungi. The formation of galls is initiated by the interaction between the plant and the invading organism. The purpose of gall formation is to create a unique environment that benefits the invading organism. Galls often provide a protected space for the organism to feed, reproduce, and complete its life cycle. Some galls even provide nutrients or shelter for the invading organism. Extensive gall formation can disrupt the normal functioning of plant tissues, impede nutrient and water uptake, and lead to stunted growth or even plant death.

Controlling gall formation has been challenging. Hence, it is an object of the invention to provide a method for preventing and/or reducing plant gall formation. The invention provides a method for preventing or reducing plant gall formation of affected plants by applying a composition comprising a suitable amount of at least one active ingredient selected from the group consisting of cytokinins, auxins, and auxin precursors. In particular, the invention provides for a method wherein at least 20 g/ha of active ingredient are applied. Preferably, the suitable amount of active ingredient is less than 1000 g/ha, more preferably less than 500 g/ha, even more preferably less than 200 g/ha, yet even more preferably less than 120 g/ha. The gall weight is preferably reduced by 40% or more, more preferably by 50% or more, even more preferably by 70% or more.

To solve the problem the present invention provides a method for preventing and/or reducing gall formation in plants. It has been found that compositions comprising at least one of an auxin, an auxin precursor, and/or a cytokinin can effectively decrease gall development. The present invention further relates to a method for treating seeds, comprising applying on seeds a composition comprising a suitable amount of at least one active ingredient selected from the group consisting of cytokinins, auxins, and auxin precursors, preferably wherein the composition is applied by coating, pelleting or dusting. The present invention further relates to the use of a composition comprising a suitable amount of an auxin, or an auxin precursor, for the prevention and/or reduction of plant gall formation.

In particular, the invention provides a method for preventing or reducing plant gall formation comprising applying on a plant a composition comprising a suitable amount of an auxin. Suitable auxins include natural or synthetic chemicals that behave like the naturally occurring auxins produced by plant enzyme systems. The terms "auxin" and "auxins" as used herein refer to such compounds in natural and synthetic form. In particular, the terms "auxin" and "auxins" according to the present invention embody naturally occurring auxins, synthetic auxins, and auxin agonists. Indoleacetic acids, indol-3-butyric acid (3-BA); naphthaleneacetamide; 2 methyl-1-naphthaleneacetic acid; and 2-methyl-1-naphthylacetamide have hormonal activity and may be used as substitutes of the naturally occurring auxins. It may be useful to have metal ions present with the auxins, such as for example zinc or manganese. In preferred embodiments, the auxin employed is selected from the group consisting of 3-indolebutyric acid, 3-indoleacetic acid, 1-naphthylacetic acid, 3-indolebutyric acid, and salts and esters thereof. Preferably, the metal ions required for a good activity are supplied together with the auxin. The auxin is preferably indole-3-butyric acid (IBA), indole-3-acetic acid (IAA), 1-naphthaleneacetic acid (NAA), or salts, esters, or amides thereof, more preferably indole-3-butyric acid (IBA), or salts, esters, or amides thereof.

Suitable auxin agonists are compounds which structures are, or closely relate to, the ones of phenoxyacetic acid, benzoic acid, pyridinoxyacetic acid, pyridinecarboxylic acid, and 6-aryl-2-pyridinecarboxylate. Other suitable auxin agonists may be compounds belonging to HRAC group 4 (auxin mimic) list.

Preferably, the amount of the auxin is about 1000 g/ha or less, more preferably 500 g/ha or less, even more preferably less than 200 g/ha, yet even more preferably less than 120 g/ha. The amount generally is about 20 g/ha or higher, preferably about 50 g/ha or higher. Therefore, the amount generally is between 20 and 1000 g/ha, preferably 20 and 500 g/ha, more preferably between 20 and 200 g/ha, even more preferably between 20 and 120 g/ha, yet even more preferably between 50 and 120 g/ha.

The auxin can be supplied as liquid concentrates or other commercially available forms, such as for example Advocate® of Fine Agrochemicals Ltd comprising IBA.

As shown in the examples, the use of an auxin shortly after sowing prevents the development of plant galls. In particular, auxin treatment reduces gall weight by 40% or more, preferably by 50% or more, more preferably by 70% or more. Further, the use of the composition according to the invention reduced the disease index in plants. In particular, disease index is reduced by 20% or more, preferably by 30% or more, even more preferably by 40% or more.

Hence, the invention in particular provides for the use of a composition comprising at least one auxin to reduce or prevent plant gall development. Preferably, plant gall development is caused by clubroot disease. Preferably the auxin is indole-3-butyric acid (IBA), indole-3-acetic acid (IAA), 1-naphthaleneacetic acid (NAA), or salts, esters, or amides thereof. More preferably, the auxin is indole-3-butyric acid (IBA).

Further, the invention provides a method for preventing or reducing plant gall formation comprising applying on a plant a composition comprising a suitable amount of an auxin precursor.

The auxin precursor may be selected from precursors of a synthetic auxin or precursors of a natural auxin. Auxin precursors release active auxin molecules via metabolic activation, for example, through hydrolysis by cellular enzymes. Suitable auxin precursors are for example disclosed in Hayashi, K. (2021) 'Chemical Biology in Auxin Research', Cold Spring Harbor Perspectives in Biology, 13(5). Suitable precursors of a synthetic auxin may be selected from sirtinol, 2,4-dichlorophenoxybutyric acid (2,4-BD). Suitable precursors of natural auxin may be selected from IAOx (indole-3-acetaldoxime), IAM (indole-3-acetamide), IPyA (indole-3-pyruvic acid), Methyle IAA and conjugate-IAA.

The invention further provides a method for preventing or reducing plant gall formation comprising applying on a plant a composition comprising a suitable amount of a cytokinin. The cytokinin may be an adenine-type cytokinin or a phenylurea-type cytokinin. Preferably, cytokinin is selected from the group consisting of 6-benzyladenine (6BA), forchlorfenuron (CPPU), kinetin, zeatin and topolin. The most preferred cytokinin is 6-benzyladenine (6BA).

Preferably, the amount of the cytokinin is about 1000 g/ha or less, more preferably 500 g/ha or less, even more preferably less than 200 g/ha, yet even more preferably less than 120 g/ha. The amount generally is about 20 g/ha or higher, preferably about 50 g/ha or higher. Therefore, the amount generally is between 20 and 1000 g/ha, preferably between 20 and 500 g/ha, more preferably between 20 and 200 g/ha, even more preferably between 20 and 120 g/ha, yet even more preferably between 50 and 120 g/ha.

The cytokinins can be supplied as liquid concentrates or other commercially available forms, such as for example Exilis® 100SC of Fine Agrochemicals Ltd. The cytokinins may also be supplied as suspension concentrates, oil dispersion, or granules, for example, controlled release granules.

As shown in the examples, the use of a cytokinin shortly after sowing prevents the development of plant galls. In particular, cytokinin treatment reduces gall weight by 40% or more, preferably by 50% or more, more preferably by 70% or more.

Hence, the invention in particular provides for the use of at least one cytokinin to reduce or prevent plant gall development. Preferably, plant gall development is caused by clubroot disease. Preferably, the cytokinin is 6-benzyladenine (6BA).

As shown in the examples, when a cytokinin is used in combination with an auxin, an improved effect on preventing gall development is achieved. As such, the invention further provides a method for preventing or reducing plant gall formation comprising applying on a plant a composition comprising a suitable amount of at least one cytokinin and at least one auxin or auxin precursor.

The cytokinin and the auxin, or auxin precursor can be applied to the plants in a mixture or separately. In the case of separate application, the individual active substances can be applied simultaneously or successively, though, in the latter case, the individual components should be applied within a short period of time, preferably within a period of time of a few seconds or a few minutes, for example 1, 2 or 3 minutes, or several hours, like 2-5 hours (i.e. on the same day), up to a few days, for example 2 or 3 days. Preference is given, however, to combined application or application within a day, more preferably combined application.

When a cytokinin is used in combination with an auxin, an auxin precursor, the cytokinin may be an adenine-type cytokinin or a phenylurea-type cytokinin. Preferably, the cytokinin is selected from the group consisting of 6-benzyladenine (6BA), forchlorfenuron (CPPU), kinetin, zeatin and topolin. The most preferred cytokinin is 6-benzyladenine (6BA).

When a cytokinin, preferably 6BA, is used in combination with an auxin, preferably IBA, gall weight is reduced by 40% or more, preferably by 50% or more, more preferably by 70% or more.

In one embodiment, the method according to the invention reduces and/or prevents plant gall formation caused by one of a bacterium, fungi, nematode, insect or protozoan. Preferably the method of the invention is applied on plants where the gall formation is caused by a protozoan parasite of the class *Phytomyxea,* more preferably one of *Spongospora subterranea, Plasmodiophora brassicae,* or *Polymyxa betae.*

In a preferred embodiment, the method according to the invention reduces and/or prevents plant gall formation caused by the protozoan parasite *Plasmodiophora brassicae. Plasmodiophora brassicae* is a soil-borne pathogen that specifically affects plants in the Brassicaceae family, which includes cruciferous crops like cabbage, broccoli, cauliflower, and canola.

In the method according to the invention, the composition may be applied by foliar application. In practicing the method according to the invention, at least a portion of the foliage of the plant may be contacted with the composition. By contact is meant that the composition is placed on the surface of the foliage of the plant(s) to be treated, where the term "foliage" is used broadly to encompass not only the leaves of the plant, but every other part of the plant that is not underground, i.e., below the soil surface, such that the term "foliage" includes leaves, stems, flowers, fruit, etc. Contact may be by any convenient methods, including spraying, applying etc.

In a preferred embodiment, the composition in the method according to the invention is applied by foliar spray.

The amount of composition that is used during any one application will vary greatly depending on the nature of the plant, the nature of the composition, the environmental conditions, etc. Where plants are treated with the subject compositions, the amount that is applied based on hectares is generally about 30 L to about 1000 L per hectare, preferably about 100 L to 500 L per hectare.

In the method of the invention, the composition can also be provided via any suitable irrigation method, which ensures that the composition penetrates the soil, the rhizosphere or is otherwise absorbed by the plant, for example, localized irrigation, spray irrigation, drip irrigation, bubbler irrigation, sub-soil irrigation, soil injection, seepage irrigation, surface irrigation, flooding, furrow, drench, application through sprinklers, micro-sprinklers or central pivot, or manual irrigation, or any combination thereof. In a specific embodiment, there may be mentioned sprinkler, subsurface drip and surface drip irrigation. In a preferred embodiment, the composition is applied by watering.

The invention also provides a method for treating seeds, comprising applying on seeds a composition comprising a suitable amount of at least one active ingredient selected from the group of cytokinins and auxins, or auxin precursors. Preferably, the composition comprises an auxin, wherein the auxin is preferably indole-3-butyric acid (IBA), indole-3-acetic acid (IAA), 1-naphthaleneacetic acid (NAA), or salts, esters, or amides thereof, more preferably wherein the auxin is indole-3-butyric acid (IBA), or salts, esters, or amides thereof.

In a particular embodiment, the method for treating seeds comprises applying on seeds a composition comprising at least an auxin and a cytokinin. Preferably the auxin is IBA, and the cytokinin is 6BA. The seeds may be coated or dressed using the applications known in the art. Coating involves the application of a thin layer of the treatment solution onto the seeds, ensuring thorough coverage. Alternatively, pelleting, or dusting methods may be employed, wherein granular particles or dry powder formulations, respectively, are applied to the seeds. Preferably the composition is applied by coating, pelleting, or dusting. In one embodiment, the method according to the invention is used for in-furrow application with seeds.

The rate and frequency of application of the compositions may vary within wide limits and depends on the type of use, the specific agrochemical, the nature of the soil, the method of application, the plant to be controlled, the prevailing climatic conditions, and other factors governed by the method of application, the time of application and the target plant.

The composition may be applied once or several times during the growth phase of the plants. The composition may be applied once, or multiple times per year. If the composition is applied by foliar spray, it is preferably applied at 5 days after sowing or later. In case the crop is planted as seedlings, foliar spray can be done within one day or later.

If the crop is sowed, early treatment preferably is done by watering the soil.

The BBCH scale, which stands for "Biologische Bundesanstalt, Bundessortenamt und Chemische Industrie" (in English, the Federal Biological Research Centre for Agriculture and Forestry, the Federal Plant Variety Office, and the German chemical industry), is a system used to describe the growth stages of various plant species. The BBCH scale is a standardized way to assess the development of crops based on observable growth and development characteristics. See Table 1 for the growth stages and BBCH-identification keys of Brassica crops (C. Feller; H. Bleiholder; L. Buhr; H. Hack; M. Hess; R. Klose; U. Meier; R. Stauss; T. van den Boom; E. Weber (1995). "Phänologische Entwicklungsstadien von Gemüsepflanzen: I. Zwiebel-, Wurzel-, Knollen- und Blattgemüse". Nachrichtenbl. Deut. Pflanzenschutzd. 47: 193-206).

In the method according to the invention, the composition may be applied up to and including BBCH-scale growth stage 16, preferably from BBCH-scale growth stage 10 to BBCH-scale growth stage 16.

**Table 1.** BBCH-scale of Brassica crops

| Growth stage | Code | Description |
|---|---|---|
| 0: Germination | 00 | Dry seed |
| | 01 | Beginning of seed imbibition |
| | 03 | Seed imbibition complete |
| | 05 | Radicle emerged from seed |
| | 07 | Hypocotyl with cotyledons breaking through seed coat |
| | 09 | Emergence: cotyledons break through soil surface |
| 1: Leaf development (Main shoot) | 10 | Cotyledons completely unfolded; growing point or true leaf initial visible |
| | 11 | First true leaf unfolded |
| | 12 | 2nd true leaf unfolded |
| | 13 | 3rd true leaf unfolded |
| | 1X | Stages continuous till ... |
| | 19 | 9 or more true leaves unfolded |
| 2: Formation of side shoots | 21 | First side shoot visible[1] |
| | 22 | 2nd side shoot visible[1] |
| | 23 | 3rd side shoot visible[1] |
| | 2X | Stages continuous till ... |
| | 29 | 9 or more side shoots visible[1] |
| 3: Stem elongation of rosette growth | | |

**EP 4 573 903 A1**

(continued)

| Growth stage | Code | Description |
|---|---|---|
| 4: Development of harvestable vegetative plant parts | | |
| 5: Inflorescence emergence | | |
| 6: Flowering | | |
| 7: Development of fruit | | |
| 8: Ripening of fruit and seed | | |
| 9: Senescence | | |

The plant in the method according to the invention is preferably a plant belonging to the family Brassicaceae. In particular, the plant in the method according to the invention is preferably a crop species belonging to the Brassica genus, such as *Brassica oleracea* (e.g., cabbage, broccoli, cauliflower, brussels sprouts, kale, kohlrabi, collard greens, savoy cabbage, gai lan), *Brassica rapa* (e.g., turnip, Chinese cabbage, oilseed, sarson), *Brassica napus* (e.g., canola, rutabaga, oilseed rape), *Brassica juncea* (e.g., mustard greens, Indian mustard, brown mustard), *Brassica carinata* (e.g., Ethiopian mustard, Abyssinian mustard), *Brassica nigra* (e.g., black mustard), *Brassica hirta* (e.g., white mustard, yellow mustard), and *Brassica tournefortii* (e.g., Asian mustard). Most preferably, the plant is selected from the *Brassica napus* species. For example, the plant may be one of winter rapeseed, summer rapeseed, and several mustard species. Oilseed rape is most preferred.

The method may also be used on other plant species for example vegetables such as *Beta vulgaris* (beetroot), *Asparagus officinalis* (asparagus), *Capsicum spp.* (pepper), *Daucus carota* (carrot), *Lactuca sativa* (lettuce), *Solanum melongena* (aubergine); curcubits such as *Benincasa spp.* (winter melon), *Citrullus spp.* (watermelon), *Cucumis spp.* (melon), *Cucumis sativus* (cucumber), *Cucurbita pepo* (pumpkin), *Solanum lycopersicum* (tomato), nuts such as *Anacardium occidentale* (cashew), *Juglans spp.* (walnut), *Coffea spp.* (coffee); fruit such as *Actinidia spp.* (kiwifruit), *Ananas comosus* (pineapple), *Mangifera indica* (mango), *Prunus spp.* (apricot), *Vitis spp.* (grapevine), *Musa spp.* (banana); berries such as *Vaccinium sect. Cyanococcus* (blueberry), *Fragaria* × *ananassa* (strawberry), *Rubus spp.* (raspberry); fabaceae such as *Glycine max* (soybean), *Phaseolus* (beans), *Pisum sativum* (pea), *Cicer arietinum* (chickpeas), *Vicia faba* (broad bean), *Medicago sativa* (alfalfa), *Arachis hypogaea* (peanut), *Ceratonia siliqua* (carob), *Lens culinaris* (lentil), *Trigonella foenum-graecum* (fenugreek), *Vigna unguiculata* (cowpea) and *Glycyrrhiza glabra* (liquorice); field crops such as *Glycine max* (soybean), *Gossypium spp.* (cotton), *Helianthus annuus* (sunflower), *Oryza sativa* (Asian rice), *Oryza glaberrima* (African rice), *Saccharum spp.* (sugarcane), *Solanum tuberosum* (potato), *Zea mays* (maize), *Triticum spp.* (wheat), *Manihot esculenta* (cassava), *Ipomoea batatas* (sweet potato), *Camellia sinensis* (tea).

The method according to the invention may also prevent and/or reduce plant gall formation in non-Brassicaceae plant families. For instance, the method according to the invention may be used on broad acre crops. Suitable broad acre crops include tuber or root crops, cereal crops, oil crops, fiber crops and other crops. Suitable tuber or root crops include potatoes or sugar beet. Suitable cereal crops include maize, rice, wheat, barley, rye, and grain. Suitable oil crops include soybean, sunflower, rapeseed or peanut. Fiber crops include, for example flax. Other crops include clover, cotton, mustard, poppy or sugarcane. The preferred broad acre crop is cereal, preferably barley, wheat, or grain.

The plant in the method of the invention may also be chosen from ornamental crops. Suitable crops include Ageratum, Aster, Azalea, Begonia, Brassica, Browallia, Calendula, Celosia, Centaurea, Coleus, Cosmos, Crossandra, Dahlia, Delphinium, Dianthus, Dicentra, Dusty Miller, Exacum, Ficus, Gardenia, Gerbera, Gomphrena, Hibiscus, Lisianthus, Lobelia, Marigold, Nemesia, Philodendron, Phlox, Poinsettia, Pothos, Radermachera, Salvia, Schefflera, Syngonium, Tagetes, Verbena, Vinca, Violets and Zinnia, Kalanchoe, Hydrangea, Petunia, Calibrachoa, Helianthus, Chrysanthemum and Sunflowers.

The plant in the method of the invention may also be chosen from roses (*Rosa spp.*), citrus (*Citrus spp.*), grapes (*Vitis spp.*), tomatoes (*Solanum lycopersicum*), stone fruits (*Prunus spp.*), cucurbits (*Cucurbitaceae family*), cotton (*Gossypium spp.*), and wheat (*Triticum spp.*).

The methods according to the invention comprise applying a composition. The invention further relates to the use of a composition. Preferred characteristics of these compositions are as follows:

The at least one active ingredient selected from the group consisting of cytokinins, auxins, and auxin precursors may be the sole active component in the composition. In another embodiment, the composition may contain further ingredients. For example, the composition may comprise one or more plant growth regulators, fungicides, metal compounds, nitrogen fertilizers, antioxidants, biocides, solvents, additives, antifoam, penetrating agents, adjuvants, lignin enhancers, symbiotic partners, plant defense agents, for example j asmonates, salicylic acid, and/or another additive known in the art like safeners, colorants and the like.

The additional compounds described below may be added in the tank mix before foliar spray or direct watering, or these may be part of a (concentrated) formulation which is diluted before foliar spray or direct watering.

The composition may further comprise additional cytokinins. Suitable cytokinins are a class of plant regulation substances (phytohormones) that promote cell division, or cytokinesis, in plant roots and shoots. There are two types of cytokinins: adenine-type cytokinins represented by kinetin, zeatin, and 6-benzylaminopurine (also referred to as BAP, 6-BAP, or 6-benzyladenine), and phenylurea-type cytokinins like diphenylurea and thidiazuron (TDZ). In preferred embodiments the cytokinin is selected from the group consisting of kinetin (synthetic or derived from seaweed), 6-BAP, 1-(2-chloropyridin-4-yl)-3-phenylurea (CPPU), and TDZ.

The composition may further comprise ethylene modulators. Suitable ethylene modulators may be selected from the group consisting of ethylene biosynthesis inhibitors which inhibit the conversion of S-adenosyl-L-methionine into 1-aminocyclopropane-1-carboxylic acid (ACC), such as derivatives of vinylglycine, hydroxylamines, oxime ether derivatives; ethylene biosynthesis inhibitors which block the conversion of ACC into ethylene, selected from the group consisting of $Co^{2+}$ or $Ni^{2+}$ ions in plant-available forms, phenolic radical scavengers such as n-propyl gallate, polyamines, such as putrescine, spermine or spermidine, structural analogs of ACC, such as $\alpha$-aminoisobutyric acid or L- aminocyclopropene-1-carboxylic acid, salicylic acid or acibenzolar-S- methyl; structural analogs of ascorbic acid which act as inhibitors of ACC oxidase, such as prohexadione-Ca or trinexapac-ethyl; and triazolyl compounds such as paclobutrazol or uniconazole as inhibitors of cytochrome P-450-dependent monooxygenases, whose main action is to block the biosynthesis of gibberellins; and inhibitors of the action of ethylene selected from the group consisting of structural analogs of ethylene such as 1-methylcyclopropene or 2,5-norbornadiene and 3-amino-1,2, 4-triazole or $Ag^{2+}$ ions.

The composition may further comprise additional plant growth regulators. Preferred additional growth regulators include one or more of gibberellins, gibberellin derivatives, S-ABA, auxins, ethephon, or chlormequat or mepiquat chloride, certain triazole or triazole like compounds with growth regulation activity like metconazole, tebuconazole and paclobutrazol and the like, daminozide, trinexapac ethyl type compounds and/or cytokinins. Some of these PGRs are ionic compounds such as chlormequat chloride.

The composition may further comprise gibberellins. Suitable gibberellins include gibberellin $A_4$ ($GA_4$), gibberellin $A_3$ ($GA_3$), gibberellin $A_5$ ($GA_5$), gibberellin $A_7$ ($GA_7$), gibberellin $A_{14}$ ($GA_{14}$), and mixtures thereof. Preferred gibberellins are ($GA_4$), gibberellin $A_3$ ($GA_3$), gibberellin $A_7$ ($GA_7$) or mixtures of these.

The composition may further comprise amino acids. Suitable amino acids are osmoprotectant amino acids, in particular proline, glycine betaine, trehalose, proline betaine, arginine, alanine, levulinic acid, histidine betaine, GABA and glutamate. Preferably, the amino acid is proline and/or glycine betaine.

The composition may further comprise compounds which enhance lignin production in roots. Suitable compounds may be ferulic acid, feruloyl-CoA, cinnamic acid, sinapic acid, p-coumaric acid, coniferyl alcohol, syringaldehyde, syringic acid, caffeic acid, p-hydroxybenzoic acid, gallic acid, p-coumaroyl-CoA and guaiacyl alcohol.

The composition may further comprise nitrogen fertilizers. Suitable nitrogen fertilizers may be urea, ammonium sulfate, ammonium nitrate, anhydrous ammonia, calcium ammonium nitrate, urea-ammonium nitrate, sodium nitrate, ammonium phosphate, potassium nitrate, ammonium chloride, ammonium polyphosphate, and other suitable slow-release nitrogen fertilizers (e.g., polymer-coated urea, sulfur-coated urea, and organic-based fertilizers), urea formaldehyde fertilizers and nitrogen solutions.

The composition may further comprise water conditioning agents. Suitable water conditioning agents may be nitrogen containing components such as urea ammonium nitrate, ammonium polyphosphate, or ammonium sulfate.

The composition may further comprise fungicides. Preferably, one or more of the following fungicides is used: specific anti powdery mildew fungicides such as morfolines like fenpropidine and fenpropimorf, metrafenone, cyflufenamide, quinoxyfen and proquinazid; SBI fungicides like triazoles such as epoxiconazole, prothioconazole, metconazole, tebuconazole, isopropanol-azol compounds etc; Strobilurines (Qol fungicides) like azoxystrobin, coumoxystrobin, dimoxystrobin, enoxastrobin, famoxadone, fenamidone, fenaminostrobin, fluoxastrobin, flufenoxystrobin, kresoxim-methyl, metominostrobin, orysastrobin, pyraoxystrobin, picoxystrobin, pyraclostrobin, pyrametastrobin, azoxystrobin, pyribencarb, triclopyricarb trifloxystrobin and SDHI like fungicides like benodanil, bixafen, boscalid, carboxin, fenfuram, fluopyram, flutolanil, fluxapyroxad, furametpyr, isopyrazam, mepronil, oxycarboxin, penflufen, penthiopyrad, sedaxane and thifluzamid. A further suitable fungicide comprises acibenzolar-s-methyl and mefentrifluconazole.

The composition may further comprise plant defence agents. Suitable plant defence agents are j asmonates or phosphonic acid, which strengthen the defence mechanisms of the plants. Suitable j asmonates include methyl jasmonate, propyldihydrojasmonate and j asmonic acid. Further suitable plant defence agents are salicylic acid (SA) and SA analogs, systemin, chitosan, silicon, benzothiadiazole (BTH), sulfur compounds, and $\beta$-Aminobutyric Acid (BABA).

The composition may further comprise metal compounds. Suitable metal compounds are, for example zinc, manganese, selenium, iron, copper, boron, molybdenum and magnesium, mixtures of these, and the like. The metal compounds may be in the form of metal ions. The metal ions can be used as chelates or salts, like for example EDTA chelates, citrate salts, proteinates or otherwise in a form that the metals are absorbed by the plant leaves.

The composition may further comprise antioxidants, such as for example vitamin-E, butylated hydroxyanisole, Vulkanox BHT (2,6-di-tert-butyl-p-cresol) or butylhydroxytoluene, propyl gallate.

The composition may further comprise antifoam agents, such as silicone-based oils, magnesium stearate or octanol.

The composition may further comprise biocides, like a bactericide and/or algicide, like for example isothiazolin-3 derivatives, like benzyl-isothiazolin, n-octyl isothiazolinone, chloro-methyl and methyl isothiazolinone; bromo-nitro-propane-diol; ethylenedioxydimethanol; (3-(3,4-dichlorophenyl)-1,1-dimethylurea; iodo-propynyl butyl carbamate; N-trichloromethylthiophtalimide; Zinc Pyrithione; dichlorophen, streptomycin, coppersulphate, or sorbate.

The compositions may further comprise microorganisms, such bacteria, for example *Bacillus spp.* (e.g., *Bacillus thuringiensis, Bacillus subtilis, Bacillus amyloliquefaciens, Bacillus velezensis, Bacillus cereus, Bacillus campestris*), *Lysobacter antibioticus, Lysoabcter capsica, Streptomyces spp.* (e.g., *Streptomyces platensis, Streptomyces olivochromogenes, Streptomyces alfalfa, Streptomyces melanosporofaciens*), *Zhihengliuella aestuarii, Pseudomonas fluorescens;* or such as fungi, for example *Trichoderma spp.* (e.g., *Trichoderma harzianum*), *Didymella glomerata, Gliocladium catenulatum, Heteroconium chaetospira, Acremonium alternatum.*

The composition can be prepared by diluting a (concentrate) formulation. Examples of formulation types are suspensions (SC, OD, FS), emulsifiable concentrates (EC), emulsions (EW, EO, ES), microemulsions (ME), pastes, pastilles, soluble liquid concentrates (SL), suspoemulsions (SE), wettable powders or dusts (WP, SP, SS, WS, DP, DS) or granules (GR, FG, GG, MG), which can be water-soluble or wettable, as well as gel formulations for the treatment of plant propagation materials such as seeds (GF).

A liquid formulation can be prepared by the supplier or can be made. For example, 100 grams of well dispersible powdery formulation can be dissolved in 10 L water, which liquid can be easily diluted with the water in a spraying tank. Concentrated formulations suitable for use in the methods according to the present invention are disclosed in WO2015/089051.

Where one starts with a parent mix or formulation comprising an active ingredient according to the invention, the subject methods may also include a dilution step, in which water is combined with the formulation in order to reduce the amount of active agent in the composition. This dilution step will comprise introducing a sufficient amount of water to the formulation to obtain at least about a 5-fold dilution, usually at least about a 10-fold dilution, and in many instances at least about a 100-fold dilution.

Preferably, the formulation is provided as a water-based liquid.

A suitable dilution comprises about 80 wt% water or more, and about 20 wt% of said formulation or less. Preferably, the formulation is diluted with water in a range of about 1: 10 to 1: 100 (in volume/volume) to obtain the composition. Suitable amounts of formulation in water include 0.1 wt%, 0.5 wt%, 1 wt%, 10 wt%, and 20 wt%. Preferably, the amounts of formulation in water are between 0.1 to 5 wt%, more preferably between 0.5 to 5 wt%.

The formulation may be prepared in stable water-soluble granule form. The granules may be prepared as disclosed in WO2015/038917. To prepare the water-dispersible granules for spray application, they are dispersed in water and form a suspension upon agitation.

In one embodiment of the invention, the formulation is provided as an oil dispersion (OD). The oil dispersion may be water free. The dispersion may be suitable to be diluted in water, in order to be able to spray the active compound on plants.

In another embodiment of the invention, the formulation is provided a soluble liquid (SL).

In another embodiment of the invention, the formulation is provided as a dispersible concentrate (DC).

In another embodiment of the invention, the formulation is provided as a suspension concentrate (SC).

The formulation is prepared in a known manner, for example by extending the active compound(s) with solvents and/or carriers, if desired using emulsifiers and dispersants.

The formulation may include solvents. Suitable solvents may be selected from water, aromatic solvents (e.g. Solvesso products, xylene), paraffins (e.g. mineral oil fractions), alcohols (e.g. methanol, butanol, pentanol, benzyl alcohol), ketones (e.g. cyclohexanone, gamma-butyrolactone), pyrrolidones (NMP, NOP), acetates (glycol diacetate), glycols, fatty acid dimethylamides, fatty acids and fatty acid esters. Solvent mixtures may also be used. Suspending agents may also be used, including carriers such as ground natural minerals (e.g. kaolins, clays, talc, chalk) and ground synthetic minerals (e.g. highly disperse silica, silicates).

The formulation may include surfactants. Suitable surfactants may be alkali metal, alkaline earth metal and ammonium salts of lignosulfonic acid, naphthalenesulfonic acid, phenolsulfonic acid, dibutylnaphthalenesulfonic acid, alkylarylsulfonates, alkyl sulfates (e.g. sodium dodecyl sulfate), alkylsulfonates, fatty alcohols (e.g. Lutensol ® AO 10), fatty alcohol sulfates, fatty acids and sulfate fatty alcohol glycol ethers, furthermore condensates of sulfonate naphthalene and naphthalene derivatives with formaldehyde, condensates of naphthalene or of naphthalenesulfonic acid with phenol and formaldehyde, polyoxyethylene octyl phenyl ether, ethoxylated isooctylphenol, octylphenol, nonylphenol, alkylphenyl polyglycol ether (e.g. Triton X-100), tributylphenyl polyglycol ether, tristerylphenyl polyglycol ether, alkylaryl polyether alcohols, alcohol and fatty alcohol/ethylene oxide condensates, fatty alcohol alkoxylates (e.g. Wettos LF700), ethoxylated castor oil, polyoxyethylene alkyl ethers, ethoxylated polyoxypropylene, lauryl alcohol polyglycol ether acetal, sorbitol esters, polyoxyethylene sorbitan monolaurate, polysorbate 20 (e.g. Tween 20), lignosulfite waste liquors and methylcellulose.

The formulation, preferably when it is an oil dispersion, may comprise a vegetable oil, hydrocarbon or paraffin oil, or a derivative therefrom as an organic hydrophobic carrier. The organic carrier has a low solubility in water, i.e. is a nonpolar, hydrophobic liquid. Thereby, the dispersion can remain essentially water free.

The formulation may comprise an emulsifier. Suitable emulsifiers are anionic, cationic or further non-ionic emulsifiers. The preferred emulsifier is non-ionic, and comprises at least one fatty acid group, at least one polyethoxy group, or more than one ethoxy group, and at least one polyol (diol, triol or higher alcohol), wherein the fatty acid and polyol may be combined in hydroxyl-fatty acid.

It is to be noted that all the active components within the composition or formulation can exist in any of their various available forms, including salts, esters, or amides.

EXAMPLES

The following formulations have been used.

Formulations

| Active ingredient | Type | Formulation | Formulation type | %w/w | g/L |
|---|---|---|---|---|---|
| 6-Benzyladenine (6-BA) | Adenine-type cytokinin | A | Suspension concentrate (SC) | 10 | 100 |
| Forchlorfenuron (CPPU) | Phenylurea-type cytokinin | B | Soluble liquid (SL) | 1 | 10 |
| Kinetin | Adenine-type cytokinin | C | Suspension concentrate (SC) | 20 | 200 |
| Indole-2-butyric acid (IBA) | Auxin | D | Soluble liquid (SL) | 20 | 200 |
| 6-Benzyladenine (6-BA) | Adenine-type cytokinin | n/a, pure product | | n/a | n/a |
| t-Zeatin | Adenine-type cytokinin | n/a, pure product | | n/a | n/a |
| m-Topolin | Adenine-type cytokinin | n/a | | n/a | n/a |

Example 1 (October 2021) - CPPU watering treatment improves clubroot resistance

Oilseed rapes of the susceptible variety Pamela were sown in conditions favorable for the expression of clubroot disease symptomatology.

Disease index, also named percentage of disease severity (DS) was calculated using the formula:

$$DS\,(\%) = (no.\,0 \times 0) + \frac{(No.\,1 \times 1) + (No.\,2 \times 2) + (No.\,3 \times 3) + (No.\,4 \times 4)}{Total\,No.\,plants \times 4} \times 100$$

wherein the scale of notation from 0 to 4 is noted as:

0: no symptoms
1: few galls on the secondary roots
2: tap-root and secondary roots slightly infected
3. tap-root infected and lot of secondary roots infected
4: tap-root highly infected and no secondary roots

Generally, plants with a disease index of scale >25% are considered susceptible variants. Plants with a disease index of scale <25% are considered resistant variant.

One week after sowing, plantlets are inoculated with a $10^6$ spores/mL suspension of spores of 2 different pathotypes of *P. brassicae*, also referred to as pathotype P1 and P3.

Plantlets were treated by watering of the soil with 25 ml/L of Formulation B at 2 and 11 days after inoculation. Evaluation of disease index and gall weight was done seven weeks after inoculation in treated and control plantlets.

Galls are weighted on a precision scale (g). Total galls weight was calculated. Results are detailed in **Table 1** below.

It is clear that a dose rate of 25 ml/L of Formulation B treatment was successful in reducing disease index. Treatment at 11 dai shows slightly better results.

A strong reduction of the average gall weight per plant was observed with a dose rate of 25 ml/L of Formulation B for both 2 and 11 days after inoculation application timing.

**Table 1.** Disease index and gall development for each formulation B treatment and pathotype tested 7 weeks after inoculation.

| Sample# | Dose rate (ml/L) | Days after inoculation (dai) | Strain | DS (%) | Total galls weight (g) | % weight reduction |
|---|---|---|---|---|---|---|
| Control uninoculated | n/a | n/a | n/a | 0 | 0 | n/a |
| Control inoculated | n/a | n/a | P1 | 98 | 62.7 | n/a |
| | | | P3 | 77 | 69.5 | n/a |
| 1 | 25 | 2 | P1 | 70 | 15.5 | 75.28 |
| | | | P3 | 68 | 27.1 | 61.01 |
| 2 | 25 | 11 | P1 | 65 | 15.6 | 75.12 |
| | | | P3 | 57 | 14.2 | 79.57 |

Example 2 (May 2022) - Foliar spray is a suitable method of treatment administration to improve clubroot resistance

An experiment was set up to investigate if foliar application of CPPU is also able to improve clubroot resistance.

Oilseed rapes of the susceptible variety Pamela were sown in conditions favorable for the expression of clubroot disease symptomatology. One week after sowing, plantlets are inoculated with a $10^6$ spores/mL suspension of spores of 2 different pathotypes of *P. brassicae*, pathotype P1.

Plantlets were treated by watering of the soil (10 ml applied) or foliar spray (1 ml applied per plant) with 25 ml/L of Formulation B at 11 days after inoculation. Evaluation of disease index and gall weight was done seven weeks after inoculation in treated and control plantlets.

**Table 2.** Experimental set up.

| Sample# | Formulation | Dose (ml/l) | Dose of a.i. (g/L) | Application | Volume applied (ml) | a.i. dose (g) |
|---|---|---|---|---|---|---|
| 1 T- | n/a | n/a | n/a | n/a | n/a | n/a |
| 2 T+ | n/a | n/a | n/a | n/a | n/a | n/a |
| 3 | B | 25 | 0.25 | watering | 10 | 0,025 |
| 4 | | 25 | 0,25 | spray | 1 | 0,00025 |

Treatment with Formulation B shows a decrease in disease index both with foliar spray and by watering.

The average of root galls in the untreated inoculated control plant is 1,31 g and Formulation B watering treatment confirm the efficacy to reduce gall development by decreasing the average galls weight to 0.10 g (92% weight reduction). In addition, foliar application also showed a strong reduction of galls weight.

Example 3 (May 2022) - Various cytokinin treatments improve clubroot resistance

Oilseed rapes of the susceptible variety Pamela were sown in conditions favorable for the expression of clubroot disease symptomatology. One week after sowing, plantlets are inoculated with a $10^6$ spores/mL suspension of spores of *P.*

*brassicae,* pathotype P1.

Formulation A (6BA) and Formulation C (kinetin) were tested using two different application methods (watering and foliar application) and dosages (2.5 ml/l and 25 ml/l for formulation A and 1.25 ml/l and 12.5 ml/l for formulation C). Treatment of the plantlets was performed according to **Table 3** at 11 days after inoculation. Evaluation of disease index and gall weight was done seven weeks after inoculation in treated and control plantlets.

**Table 3.** Experimental set up.

| Sample# | Formulation | Dose (ml/l) | Dose of a.i. (g/L) | Application | Volume applied (ml) | a.i. dose (g) |
|---|---|---|---|---|---|---|
| 1 T- | n/a | n/a | n/a | n/a | n/a | n/a |
| 2 T+ | n/a | n/a | n/a | n/a | n/a | n/a |
| 3 | A | 25 | 2,5 | watering | 10 | 0,025 |
| 4 | | 2,5 | 0,25 | watering | 10 | 0,0025 |
| 5 | | 25 | 2,5 | spray | 1 | 0,0025 |
| 6 | | 2,5 | 0,25 | spray | 1 | 0,00025 |
| 7 | C | 12,5 | 2,5 | watering | 10 | 0,025 |
| 8 | | 1,25 | 0,25 | watering | 10 | 0,0025 |
| 9 | | 12,5 | 2,5 | spray | 1 | 0,0025 |
| 10 | | 1,25 | 0,25 | spray | 1 | 0,00025 |

The results of the experiment are shown in **Table 4.** Both foliar treatment by spraying or watering of Formulation A are able to decrease disease index. Both application methods were effective in reducing galls weight. Formulation C is also able to decrease disease index and to reduce galls weight after foliar spray or watering treatment.

It was also observed that some plants treated with high cytokinin doses showed galls at development stage 3 or 4 with atrophied phenotype (weight = 0).

**Table 4.** Gall development for Formulation A or Formulation C treatment tested 7 weeks after inoculation.

| Sample# | DS (%) | Total galls weight (g) | % weight reduction |
|---|---|---|---|
| 1 T- | 0 | 0 | n/a |
| 2 T+ | 98 | 39.19 | n/a |
| 3 | 78 | 3.78 | 90.35 |
| 4 | 94 | 22.08 | 43.66 |
| 5 | 54 | 5.16 | 86.83 |
| 6 | 78 | 17.09 | 56.39 |
| 7 | 88 | 25.61 | 34.65 |
| 8 | 91 | 34.72 | 11.41 |
| 9 | 93 | 31.62 | 19.32 |
| 10 | 81 | 24.39 | 37.76 |

Example 4 (November 2022) - Various cytokinin active ingredients are able to improve clubroot resistance

Oilseed rapes of the susceptible variety Pamela were sown in conditions favorable for the expression of clubroot disease symptomatology. One week after sowing, plantlets are inoculated with a $10^6$ spores/mL suspension of spores of *P. brassicae,* pathotype P1-.

Plantlets were treated by foliar spray treatment (1 ml per plant) with the active ingredients 6BA, t-Zeatin or m-topolin. The active ingredients were tested at different dose rates (2.5 g/l or 0.25 g/l) 11 days after inoculation. Evaluation of disease index and gall weight was done seven weeks after inoculation in treated and control plantlets.

Results are shown in **Table 5.** Foliar treatment with adenine-type cytokinins shows a decrease in galls development with dose effect. 6BA exhibit the best results, followed by t-Zeatin.

**Table 5.** Experimental set up and gall development for each treatment tested 7 weeks after inoculation.

| Sample# | Formulation | Dose (g of ai/l) | DS (%) | Total galls weight (g) | % weight reduction |
|---------|-------------|------------------|--------|------------------------|--------------------|
| 1 T- | n/a | n/a | 0 | 7.95 | n/a |
| 2 T+ | n/a | n/a | 100 | 51.78 | n/a |
| 3 | 6BA | 2.5 | 65 | 12.95 | 74.99 |
| 4 | | 0.25 | 100 | 37.01 | 28.52 |
| 5 | t-Zeatin | 2.5 | 80 | 30.13 | 41.81 |
| 6 | | 0.25 | 100 | 40.49 | 21.80 |
| 7 | Topolin | 2.5 | 99 | 43.69 | 15.62 |
| 8 | | 0.25 | 100 | 49.74 | 3.94 |

Example 5 (November 2022) -Formulation A foliar application is effective on different strains and different dose rates

Oilseed rapes of the susceptible variety Pamela were sown in conditions favorable for the expression of clubroot disease symptomatology. One week after sowing, plantlets are inoculated with a $10^6$ spores/mL suspension of spores of 3 different pathotypes of *P. brassicae,* namely P1-, P1 * and P3.

Plantlets were treated by foliar spray treatment with Formulation A at different dose rates 11 days after inoculation. Evaluation of disease index and galls weight was done seven weeks after inoculation in treated and control plantlets.

Results are shown in **Table 6.** Foliar spray treatment with Formulation A shows a decrease in galls weight for all pathotypes with dose effect.

**Table 6.** Experimental set up and gall development for each treatment tested 7 weeks after inoculation.

| Sample# | Formulation | Dose (ml/l) | Strain | DS (%) | Total galls weight (g) | % weight reduction |
|---------|-------------|-------------|--------|--------|------------------------|--------------------|
| 1 T- | n/a | n/a | n/a | 0 | 7.95 | n/a |
| 2 T+ | n/a | n/a | P1- | 100 | 51.78 | n/a |
| 3 T+ | n/a | n/a | P1 * | 100 | 41.18 | n/a |
| 4 T+ | n/a | n/a | P3 | 92 | 67.53 | n/a |
| 5 | A | 10 | P1- | 83 | 26.96 | 47,9 |
| 6 | | 25 | P1- | 78 | 12.80 | 75,3 |
| 7 | | 50 | P1- | 68 | 7.36 | 85,8 |
| 8 | | 10 | P1* | 98 | 23.6 | 42,7 |
| 9 | | 25 | P1* | 98 | 12.65 | 69,3 |
| 10 | | 50 | P1* | 95 | 10.14 | 75,4 |
| 11 | | 10 | P3 | 96 | 26.14 | 61,3 |
| 12 | | 25 | P3 | 93 | 20.33 | 69,9 |
| 13 | | 50 | P3 | 93 | 17.91 | 73,5 |

Example 5 (April 2023) - Formulation A foliar application is effective 6 and 11 days after inoculation

Oilseed rapes of the susceptible variety Pamela were sown in conditions favorable for the expression of clubroot disease symptomatology. One week after sowing, plantlets are inoculated with a $10^6$ spores/mL suspension of spores of *P. brassicae,* pathotype P1-.

Plantlets were treated by foliar spray treatment with Formulation A at different dose rates (10 ml/l or 25 ml/l) and days after inoculation (6 dai or 11 dai). Evaluation of disease index and galls weight was done seven weeks after inoculation in treated and control plantlets. Results are shown in **Table 7.** Treatment with Formulation A is effective in decreasing galls weight both 6 and 11 days after inoculation.

**Table 7.** Experimental set up and gall development for each formulation A treatment tested 7 weeks after inoculation.

| Sample# | Dose (ml/1) | Days after inoculation (dai) | DS (%) | Total galls weight (g) | % weight reduction |
|---|---|---|---|---|---|
| 1 T- | n/a | n/a | 0 | 0 | n/a |
| 2 T+ | n/a | n/a | 100 | 61.29 | n/a |
| 3 | 10 | 6 | 88 | 25.93 | 57.69 |
| 4 | 25 | 6 | 83 | 17.45 | 71.53 |
| 5 | 10 | 11 | 90 | 26.24 | 57.19 |
| 6 | 25 | 11 | 87 | 24.20 | 60.52 |

Example 6 (April 2023) - Auxin treatment can improve clubroot resistance

Oilseed rapes of the susceptible variety Pamela were sown in conditions favorable for the expression of clubroot disease symptomatology. One week after sowing, plantlets are inoculated with a $10^6$ spores/mL suspension of spores of *P. brassicae,* pathotype P1-.

Plantlets were treated by foliar spray treatment with Formulation D, comprising indole-3-butyric acid (IBA) at different dose rates (1.5 ml/l or 3 ml/l) and days after inoculation (6 dai or 11 dai). Evaluation of disease index and galls weight was done seven weeks after inoculation in treated and control plantlets. Results are shown in **Table 8.** The results show that treatment Formulation D is also able to decrease gall development in OSR. Further, the results show that when treatment is done earlier (i.e., 6 dai), disease index can also be reduced significantly. Earlier treatment (6 dai) and higher dosage (3 ml/l) are slightly preferred. Treatment with Formulation D also improves coloration of the plants (from brown/red to green).

**Table 8.** Experimental set up and gall development for each treatment tested 7 weeks after inoculation.

| Sample# | Dose (ml/1) | Days after inoculation (dai) | DS (%) | Total galls weight (g) | % weight reduction |
|---|---|---|---|---|---|
| 1 T- | n/a | n/a | 0 | 0 | n/a |
| 2 T+ | n/a | n/a | 100 | 61.29 | n/a |
| 3 | 1.5 | 6 | 71 | 21.32 | 65.21 |
| 4 | 3.0 | 6 | 62 | 17.08 | 72.13 |
| 5 | 1.5 | 11 | 93 | 50.35 | 17.84 |
| 6 | 3.0 | 11 | 90 | 27.25 | 55.5 |

Example 7 (April 2023) - Combination of auxin and cytokinin treatment improves clubroot resistance

Oilseed rapes of the susceptible variety Pamela were sown in conditions favorable for the expression of clubroot disease symptomatology. One week after sowing, plantlets are inoculated with a $10^6$ spores/mL suspension of spores of *P. brassicae,* pathotype P1-.

Plantlets were treated by foliar spray treatment with 10 ml/l of Formulation A together with Formulation D at different dose rates (1.5 ml/l or 3 ml/l). Treatment was done 11 days after inoculation. Evaluation of disease index and galls weight was done seven weeks after inoculation in treated and control plantlets. Results are shown in **Table 9.** The results show that the combination of auxin and cytokinin has a positive effect in improving galls weight reduction.

**Table 9.** Experimental set up and gall development for each treatment tested 7 weeks after inoculation.

| Sample# | Dose A (ml/1) | Dose D (ml/l) | DS (%) | Total galls weight (g) | % weight reduction |
|---|---|---|---|---|---|
| 1 T- | n/a | n/a | 0 | 0 | n/a |
| 2 T+ | n/a | n/a | 100 | 61.29 | n/a |
| 3 | 10 | 1.5 | 81 | 5.76 | 90.60 |
| 4 | 10 | 3 | 81 | 5.18 | 91.55 |

As is clear from the results, even though the disease index does not show huge differences, the total gall weight is substantially lower than the reference. This also means in practice, that plants are using substantially less energy for gall formation.

Example 8 (September 2023) - Auxin treatment improves gall development and disease reduction in field trials

A susceptible canola cultivar to clubroot "DKL-DKTFLL21SC" was planted half inch depth on June 1st, 2023. The Formulation D, comprising indole-3-butyric acid (IBA) was tested at two application timings (2-leaf and 4-leaf stage, i.e., BBCH stage 12 and 14 respectively) and two rates (0.15 l/ha and 0.3 l/ha) was applied in a randomized complete block design (RCBD) arranged factorially with four replications under field conditions. The field had a natural soil population of *P. brassicae* of 5.5 million resting spores/g of soil. Evaluation of disease index was done 60 days after planting in treated and control plantlets. Results are shown in **Table 10 and Table 11.** The results show that treatment with Formulation D is also able to decrease disease index in field conditions. Further, the results show that when treatment is done at the four-leaf stage, disease index can also be reduced significantly. Treatment at four-leaf stage and higher dosage (0.3 l/ha) is slightly preferred.

**Table 10.** Experimental set up and gall development for each treatment tested 60 days after planting.

| Plot# | BBCH-scale | DS (%)R | | |
|---|---|---|---|---|
| | | Untreated | 0.15 l/ha | 0.3 l/ha |
| 1 | 12 | 79 | 33 | 76 |
| 2 | 12 | 60 | 96 | 31 |
| 3 | 12 | 84 | 60 | 48 |
| 4 | 12 | 80 | 56 | 60 |
| Average | | 67* | 61 | 54 |
| %DI reduction | | | 8 | 20 |
| *The average of the untreated plots is calculated using the data from both Tables 10 and 11. | | | | |

**Table 11.** Experimental set up and gall development for each treatment tested 60 days after planting.

| Plot# | BBCH-scale | DS (%) | | |
|---|---|---|---|---|
| | | Untreated | 0.15 l/ha | 0.3 l/ha |
| 5 | 14 | 27 | 52 | 4 |
| 6 | 14 | 83 | 45 | 0 |
| 7 | 14 | 80 | 76 | 19 |
| 8 | 14 | 43 | 40 | 48 |
| Average | | 67* | 53 | 18 |
| %DI reduction | | | 20 | 74 |
| *The average of the untreated plots is calculated using the data from both Tables 10 and 11. | | | | |

The invention has been described by reference to certain embodiments discussed above. It will be recognized that these embodiments are susceptible to various modifications and alternative forms well known to those of skill in the art without departing from the scope of the invention. Accordingly, although specific embodiments have been described, these are examples only and are not limiting upon the scope of the invention, which is defined in the accompanying claims.

**Claims**

1. A method for preventing or reducing plant gall formation comprising applying on a plant a composition comprising a suitable amount of at least one active ingredient selected from the group consisting of cytokinins, auxins, and auxin precursors, such that at least 20 g/ha of active ingredient are applied.

2. Method according to claim 1, wherein the suitable amount of the at least one active ingredient is less than 1000 g/ha, preferably less than 500 g/ha, more preferably less than 200 g/ha, even more preferably less than 120 g/ha.

3. Method according to any one of the preceding claims, wherein the composition comprises an auxin, wherein the auxin is preferably indole-3-butyric acid (IBA), indole-3-acetic acid (IAA), 1-naphthaleneacetic acid (NAA), or salts, esters, or amides thereof, more preferably wherein the auxin is indole-3-butyric acid (IBA), or salts, esters, or amides thereof.

4. Method according to claim 3, wherein the composition further comprises a cytokinin, preferably wherein the cytokinin is 6-benzyladenine (6BA).

5. Method according to any one of the preceding claims, wherein the composition comprises a cytokinin, wherein the cytokinin is preferably selected from the group consisting of 6-benzyladenine (6BA), forchlorfenuron (CPPU), kinetin, zeatin and topolin, even more preferably wherein the cytokinin is 6-benzyladenine (6BA).

6. The method according to any one of the preceding claims, wherein the plant is selected from the Brassicaceae family, preferably wherein the plant is selected from the Brassica genus, more preferably selected from the list comprising *Brassica oleracea* including cabbage, broccoli, cauliflower, brussels sprouts, kale, kohlrabi, collard greens, savoy cabbage, gai lan; *Brassica rapa,* including turnip, Chinese cabbage, oilseed, sarson; *Brassica napus,* including canola, rutabaga, oilseed rape; *Brassica juncea,* including mustard greens, Indian mustard, brown mustard; *Brassica carinata,* including Ethiopian mustard, Abyssinian mustard; *Brassica nigra,* including black mustard; *Brassica hirta,* including white mustard, yellow mustard; and *Brassica tournefortii,* including Asian mustard, more preferably wherein the plant is *Brassica napus,* even more preferably wherein the plant is oilseed rape.

7. Method according to claim 6, wherein the composition is applied up to BBCH-scale growth stage 20, preferably between BBCH-scale growth stage 10 and BBCH-scale growth stage 20, more preferably between BBCH-scale growth stage 12 and BBCH-scale growth 16.

8. Method according to any one of the preceding claims, wherein the composition is applied by foliar spray.

9. Method according to any one of claims 1-7, wherein the composition is applied by watering.

10. The method according to any one of the preceding claims, wherein plant gall formation is caused by one of a bacterium, fungi, insect or protozoan, preferably wherein the plant gall formation is caused by a protozoan parasite of the class *Phytomyxea,* more preferably wherein the protozoan parasite is one of *Spongospora subterranea, Plasmodiophora Brassicaceae,* or *Polymyxa betae,* even more preferably wherein the protozoan parasite is *Plasmodiophora Brassicaceae.*

11. A method for treating seeds, comprising applying on seeds a composition comprising a suitable amount of at least one active ingredient selected from the group consisting of cytokinins, auxins, and auxin precursors, preferably wherein the composition is applied by coating, pelleting, or dusting, and wherein preferably the amount of the at least one active ingredient is 30g to 6kg per 100 kg of seeds,
and preferably:

- wherein the composition comprises an auxin, wherein the auxin is preferably indole-3-butyric acid (IBA), indole-3-acetic acid (IAA), 1-naphthaleneacetic acid (NAA), or salts, esters, or amides thereof, more preferably wherein the auxin is indole-3-butyric acid (IBA), or salts, esters, or amides thereof, and more preferably further comprises a cytokinin, preferably wherein the cytokinin is 6-benzyladenine (6BA), or
- wherein the composition comprises a cytokinin, wherein the cytokinin is preferably selected from the group consisting of 6-benzyladenine (6BA), forchlorfenuron (CPPU), kinetin, zeatin and topolin, even more preferably wherein the cytokinin is 6-benzyladenine (6BA).

12. Use of a composition comprising a suitable amount of an auxin, or an auxin precursor, preferably comprising an auxin, wherein the auxin is preferably indole-3-butyric acid (IBA), indole-3-acetic acid (IAA), 1-naphthaleneacetic acid (NAA), or salts, esters, or amides thereof, more preferably wherein the auxin is indole-3-butyric acid (IBA), or salts, esters, or amides thereof for the prevention and/or reduction of plant gall formation, preferably of plant gall formation caused by clubroot disease.

13. Use of a composition according to claim 12, wherein the composition further comprises a suitable amount of a cytokinin, wherein preferably the cytokinin is 6-benzyladenine (6BA).

14. Use of a composition according to claims 12-13, wherein plant gall weight is reduced by 40% or more, preferably by 50% or more, more preferably by 70% or more.

15. Use of a composition according to claims 12-13, wherein the composition reduces the stress in the plant shown as a return to green plant coloration.

16. Use of a composition according to claims 12-13, wherein disease index is reduced by 20% or more, preferably by 30% or more.

# EP 4 573 903 A1

Europäisches
Patentamt

European
Patent Office

Office européen
des brevets

Application Number

EP 23 21 9524

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | LINNEA BARTLETT, EDWARD F CONNOR: "Exogenous phytohormones and the induction of plant galls by insects", ARTHROPOD-PLANT INTERACTIONS, 5 June 2014 (2014-06-05), pages 339-348, XP93159859, Dordrecht ISSN: 1872-8855, DOI: 10.1007/s11829-014-9309-0 Retrieved from the Internet: URL:http://link.springer.com/article/10.10 07/s11829-014-9309-0/fulltext.html> * abstract * * page 341, column 2, line 3 – line 13 * * page 343, column 1, line 13 – column 2, line 7 * * figures 2, 5 * -& Linnea Bartlett, Edward F Connor: "Exogenous Phytohormones and the Induction of Plant Galls by Insects Arthropod-Plant Interactions – Supplementary Material 1/2/3 (to XP93159859)", Arthropod-Plant Interactions, 5 June 2014 (2014-06-05), pages 1-3, XP93159865, DOI: 10.1007/s11829-014-9309-0 Retrieved from the Internet: URL:https://link.springer.com/article/10.1 007/s11829-014-9309-0#Sec19 ----- -/-- | 1-16 | INV. A01N37/10 A01N43/38 A01N43/90 A01N47/36 A01P15/00 A01P21/00 |
| | | | TECHNICAL FIELDS SEARCHED (IPC) A01N A01P |

The present search report has been drawn up for all claims

| Place of search | Date of completion of the search | Examiner |
|---|---|---|
| Munich | 8 May 2024 | Habermann, Jörg |

page 1 of 6

Europäisches
Patentamt

European
Patent Office

Office européen
des brevets

# EUROPEAN SEARCH REPORT

**Application Number**

EP 23 21 9524

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ASTRID SCHULLER: "Laser Microdissection Coupled to Transcriptional Profiling of Arabidopsis Roots Inoculated by Plasmodiophora brassicae Indicates a Role for Brassinosteroids in Clubroot Formation", PLANT AND CELL PHSIOLOGY, vol. 55, no. 2, 1 February 2014 (2014-02-01), pages 392-411, XP93160025, UK ISSN: 0032-0781, DOI: 10.1093/pcp/pct174 Retrieved from the Internet: URL:https://watermark.silverchair.com/pct174.pdf?token=AQECAHi208BE49Ooan9kkhW_Ercy7Dm3ZL_9Cf3qfKAc485ysgAAA1wwggNYBgkqhkiG9w0BBwaggggNJMIIDRQIBADCCAz4GCSqGSIb3DQEHATAeBglghkgBZQMEAS4wEQQMwB-VSvfbnQTze5d7AgEQgIIDD4Kge45ktljyC-8PtoV4UsjOuSTld7gKwW_VM3__Q0eQuumq263vYd_Z3WIJ2iMOgM-pBGkvqMZAMdvn3x0K72N6ak2zJ> * page 401, column 2, line 9 - line 19 * * figure 7 * ----- | 1-16 | |
| Y | DATABASE BIOSIS [Online] Clarivate Analytics; 1 January 1977 (1977-01-01), S G Mjuge: "INFLUENCE OF GROWTH PROMOTERS AND INHIBITORS ON TOMATO PLANTS INFECTED WITH MELOIDOGYNE-INCOGNITA AND MELOIDOGYNE-HAPLA.", XP93160062, Database accession no. 1977:109505 * abstract * ----- | 1-16 | |

TECHNICAL FIELDS
SEARCHED (IPC)

-/--

The present search report has been drawn up for all claims

| Place of search | Date of completion of the search | Examiner |
|---|---|---|
| Munich | 8 May 2024 | Habermann, Jörg |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

page 2 of 6

Europäisches
Patentamt

European
Patent Office

Office européen
des brevets

# EUROPEAN SEARCH REPORT

**Application Number**

EP 23 21 9524

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JI RUIQIN ET AL: "The Salicylic Acid Signaling Pathway Plays an Important Role in the Resistant Process of Brassica rapa L. ssp. pekinensis to Plasmodiophora brassicae Woronin", JOURNAL OF PLANT GROWTH REGULATION, vol. 40, no. 1, 11 April 2020 (2020-04-11), pages 405-422, XP037378686, ISSN: 0721-7595, DOI: 10.1007/S00344-020-10105-4 * page 414, column 1, line 4 – line 18 * * table 6 * * figure 11 * | 1-16 | |
| A | KAMMERICH J. ET AL: "Suppression of the clubroot pathogen Plasmodiophora brassicae by plant growth promoting formulations in roots of two Brassica species", PLANT PATHOLOGY, vol. 63, no. 4, 29 October 2013 (2013-10-29), pages 846-857, XP055935825, GB ISSN: 0032-0862, DOI: 10.1111/ppa.12148 * page 856, column 2, line 29 – line 44 * * tables 2, 3 * * figures 2, 2 * | 1-16 | **TECHNICAL FIELDS SEARCHED** (IPC) |
| A | US 2015/230474 A1 (WEI YANGDOU [CA] ET AL) 20 August 2015 (2015-08-20) * example 2 * * claim 1 * | 1-16 | |

-/--

The present search report has been drawn up for all claims

| Place of search | Date of completion of the search | Examiner |
|---|---|---|
| Munich | 8 May 2024 | Habermann, Jörg |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

........................................................................................

& : member of the same patent family, corresponding
  document

EPO FORM 1503 03.82 (P04C01)

page 3 of 6

Europäisches
Patentamt

European
Patent Office

Office européen
des brevets

# EUROPEAN SEARCH REPORT

**Application Number**

EP 23 21 9524

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | MALINOWSKI ROBERT ET AL: "The role of cytokinins in clubroot disease", EUROPEAN JOURNAL OF PLANT PATHOLOGY, SPRINGER NETHERLANDS, NL, vol. 145, no. 3, 14 January 2016 (2016-01-14), pages 543-557, XP035972717, ISSN: 0929-1873, DOI: 10.1007/S10658-015-0845-Y [retrieved on 2016-01-14] * page 544, column 1, line 25 – line 29 * * page 551, column 1, line 11 – line 20 * * page 554, column 2, line 15 – line 33 * * page 555, column 2, line 2 – line 6 * * page 555, column 2, line 30 – line 38 * ----- | 1-16 | |
| X | MUHAMMAD IQBAL: "Presowing Seed Treatment with Cytokinins and Its Effect on Growth, Photosynthetic Rate, Ionic Levels and Yield of Two Wheat Cultivars Differing in Salt Tolerance", JOURNAL OF INTEGRATIVE PLANT BIOLOGY, vol. 47, no. 11, 1 November 2005 (2005-11-01), pages 1315-1325, XP093160286, GB ISSN: 1672-9072, DOI: 10.1111/j.1744-7909.2005.00163.x * page 1316, column 1, line 25 – line 39 * * page 1324, column 1, line 20 – line 23 * * table 1 * ----- | 11 | TECHNICAL FIELDS SEARCHED (IPC) |

-/--

The present search report has been drawn up for all claims

| Place of search | Date of completion of the search | Examiner |
|---|---|---|
| Munich | 8 May 2024 | Habermann, Jörg |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 4 of 6

Europäisches
Patentamt

European
Patent Office

Office européen
des brevets

## EUROPEAN SEARCH REPORT

**Application Number**

EP 23 21 9524

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MUHAMMAD KAMRAN: "Pre-sowing seed treatment with kinetin and calcium mitigates salt induced inhibition of seed germination and seedling growth of choysum (Brassica rapa var. parachinensis)", ECOTOXICOLOGY AND ENVIRONMENTAL SAFETY, vol. 227, 1 December 2021 (2021-12-01), page 112921, XP093160300, US ISSN: 0147-6513, DOI: 10.1016/j.ecoenv.2021.112921 Retrieved from the Internet: URL:https://pdf.sciencedirectassets.com/27 2576/1-s2.0-S0147651321X00188/1-s2.0-S0147 651321010332/main.pdf?X-Amz-Security-Token =IQoJb3JpZ2luX2VjEH0aCXVzLWVhc3QtMSJHMEUCI QCBRnmH65G0Rkx/iHFhjwZVlB55xhCwOIt0NMWDDnw w+QIgcLo5MXzsAnZBrEDmK9wXcaFrRGxo8iWic6Tvq DBKsqIqvAUI1v//////////ARAFGgwwNTkwMDM1NDY 4NjUiDLn+i> * abstract * * paragraphs 2.1, 3.1, 5 * * figure 1 * ----- | 1-16 | |
| X | CZ 30 989 U1 (UNIVERZITA PALACKÉHO V OLOMOUCI [CZ]) 5 September 2017 (2017-09-05) | 12,14-16 | |
| Y | * page 3, line 28 - page 4, line 1 * * page 4, line 11 - line 20 * * page 5, line 10 - page 6, line 24 * ----- -/-- | 1-16 | |

TECHNICAL FIELDS SEARCHED (IPC)

The present search report has been drawn up for all claims

| Place of search | Date of completion of the search | Examiner |
|---|---|---|
| Munich | 8 May 2024 | Habermann, Jörg |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
........................................................................
& : member of the same patent family, corresponding
   document

EPO FORM 1503 03.82 (P04C01)

**EUROPEAN SEARCH REPORT**

Application Number

EP 23 21 9524

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | XU LI ET AL: "Putative role of IAA during the early response of Brassica napus L. to Plasmodiophora brassicae", EUROPEAN JOURNAL OF PLANT PATHOLOGY, SPRINGER NETHERLANDS, NL, vol. 145, no. 3, 6 February 2016 (2016-02-06), pages 601-613, XP035972719, ISSN: 0929-1873, DOI: 10.1007/S10658-016-0877-Y [retrieved on 2016-02-06] * page 603, column 1, line 40 - column 2, line 6 * * page 605, column 1, line 14 - column 2, line 7 * * page 610, column 1, line 19 - line 20 * * table 2 * * figure 1 * ----- | 1-16 | |

TECHNICAL FIELDS
SEARCHED       (IPC)

The present search report has been drawn up for all claims

| Place of search | Date of completion of the search | Examiner |
|---|---|---|
| Munich | 8 May 2024 | Habermann, Jörg |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 573 903 A1**

## ANNEX TO THE EUROPEAN SEARCH REPORT
## ON EUROPEAN PATENT APPLICATION NO.

EP 23 21 9524

08-05-2024

| Patent document cited in search report | | Publication date | Patent family member(s) | | Publication date |
|---|---|---|---|---|---|
| US 2015230474 | A1 | 20-08-2015 | AU | 2015200772 A1 | 03-09-2015 |
| | | | CA | 2843032 A1 | 19-08-2015 |
| | | | US | 2015230474 A1 | 20-08-2015 |
| CZ 30989 | U1 | 05-09-2017 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012096405 A
- WO 2005045004 A
- EP 1525317 A

- WO 2015089051 A
- WO 2015038917 A

**Non-patent literature cited in the description**

- **HAYASHI, K**. Chemical Biology in Auxin Research. Cold Spring Harbor Perspectives in Biology, 2021, vol. 13

- **C. FELLER** ; **H. BLEIHOLDER** ; **L. BUHR** ; **H. HACK** ; **M. HESS** ; **R. KLOSE** ; **U. MEIER** ; **R. STAUSS** ; **T. VAN DEN BOOM** ; **E. WEBER**. Phänologische Entwicklungsstadien von Gemüsepflanzen: I. Zwiebel-, Wurzel-, Knollen- und Blattgemüse. *Nachrichtenbl. Deut. Pflanzenschutzd.*, 1995, vol. 47, 193-206